**Europäisches Patentamt**

**European Patent Office**

**Office européen des brevets**

(19)

(11) Numéro de publication : **0 493 169 B1**

(12)

# FASCICULE DE BREVET EUROPEEN

(45) Date de publication du fascicule du brevet :
31.08.94 Bulletin 94/35

(51) Int. Cl.⁵ : **G01B 9/02, G01D 5/26**

(21) Numéro de dépôt : **91403355.0**

(22) Date de dépôt : **11.12.91**

(54) **Dispositif d'analyse de capteurs interferométriques de micro-déplacements.**

(30) Priorité : **18.12.90 FR 9015852**

(43) Date de publication de la demande :
01.07.92 Bulletin 92/27

(45) Mention de la délivrance du brevet :
31.08.94 Bulletin 94/35

(84) Etats contractants désignés :
**DE GB IT**

(56) Documents cités :
EP-A- 0 401 694
DE-A- 3 044 183
DE-A- 3 208 512

(73) Titulaire : **SEXTANT AVIONIQUE**
**5,7, rue Jeanne Braconnier**
**Parc Tertiaire**
**F-92360 Meudon-la-Forêt (FR)**

(72) Inventeur : **Breda, Jean-Marc**
**THOMSON-CSF,**
**SCPI,**
**Cédex 67**
**F-92045 Paris la Défense (FR)**

(74) Mandataire : **Chaverneff, Vladimir et al**
**THOMSON-CSF**
**SCPI**
**B.P. 329**
**50, rue Jean-Pierre Timbaud**
**F-92402 Courbevoie Cédex (FR)**

## Description

L'invention se rapporte à un dispositif d'analyse de capteurs interférométriques de micro-déplacements.

Pour réaliser une mesure de micro-déplacements, un procédé connu fait appel à un capteur à fibre et à interféromètres couplés. Ce capteur est constitué essentiellement d'un interféromètre de Michelson pour la mesure, d'une fibre optique multimodale pour le transport de l'information vers le dispositif d'analyse, et d'un second interféromètre de Michelson pour l'analyse. Ce procédé présente de nombreux avantages, dont une très grande sensibilité et une totale immunité aux perturbations extérieures.

Un des principaux inconvénients du dispositif de mesure mettant en oeuvre ce procédé est la nécessité d'un interféromètre de Michelson extrêmement précis dans le dispositif d'analyse, donc un prix de revient élevé. Lorsque l'on veut réaliser un système de mesure à plusieurs capteurs, il faut autant d'interféromètres d'analyse que de capteurs, ce qui rend ce système multi-capteurs très onéreux.

La présente invention a pour objet un système de mesure multi-capteurs qui soit le moins onéreux possible, tout en ayant la même précision que le système connu.

Le système multi-capteurs de l'invention comprend plusieurs (N) capteurs ayant chacun un interféromètre de mesure, et reliés chacun par une fibre optique à un dispositif d'analyse comportant un seul interféromètre commun d'analyse, les extrémités des différentes fibres optiques, côté analyse, étant disposées sur un cercle et coopérant avec un dispositif optique de collimation placé devant l'interféromètre d'analyse.

L'invention sera mieux comprise à la lecture de la description détaillée de plusieurs modes de réalisation, pris à titre d'exemples non limitatifs et illustrés par le dessin annexé, sur lequel :

- la figure 1, relative à l'art antérieur, est un schéma simplifié d'un capteur à interféromètres couplés ;
- les figures 2 et 3 sont respectivement un diagramme d'un spectre cannelé et d'un interférogramme, pouvant être observés dans le capteur de la figure 1 ;
- la figure 4 est un schéma simplifié d'un dispositif conforme à l'invention ;
- la figure 5 est un schéma illustrant le principe de fonctionnement d'un interféromètre du dispositif de la figure 4 ;
- la figure 6 est un schéma simplifié montrant la disposition de plusieurs fibres couplées à une source de lumière unique ;
- la figure 7 est un schéma simplifié d'un variante du dispositif de l'invention, sans coupleur ;
- la figure 8 est un schéma d'une tête de mesure à interféromètre de Fizeau, pouvant être utilisée dans le dispositif de l'invention ;
- la figure 9 est un schéma montrant un exemple de branchement de connecteurs dans le dispositif de l'invention, et
- la figure 10 est une vue simplifiée en perspective d'une tête d'analyse à interféromètre de Fizeau.

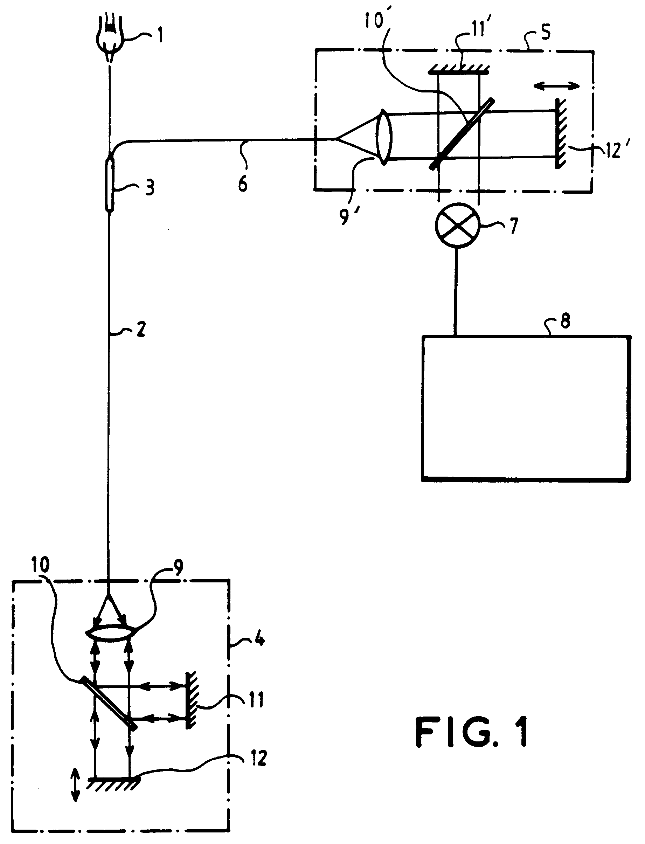

Le capteur à interféromètres couplés de la figure 1 comporte essentiellement : une source de lumière blanche 1 (lampe à incandescence ou diode électroluminescente), une fibre multimode 2 dont une extrémité est éclairée par la source 1, un coupleur 3 placé sur la fibre 2, un interféromètre de Michelson 4 coopérant avec l'autre extrémité de la fibre 2, un deuxième interféromètre de Michelson 5, placé à une extrémité d'une fibre optique 6 reliée par son autre extrémité au coupleur 3, et coopérant avec un détecteur 7 relié à un dispositif de mesure électronique 8.

L'interféromètre 4 comprend : une optique de collimation 9, une lame semi-réfléchissante 10, un miroir fixe de référence 11, et un miroir mobile 12 qui est soumis aux micro-déplacements à mesurer. Le deuxième interféromètre 5 comprend les mêmes éléments que le premier, et qui sont respectivement référencés 9' à 12'.

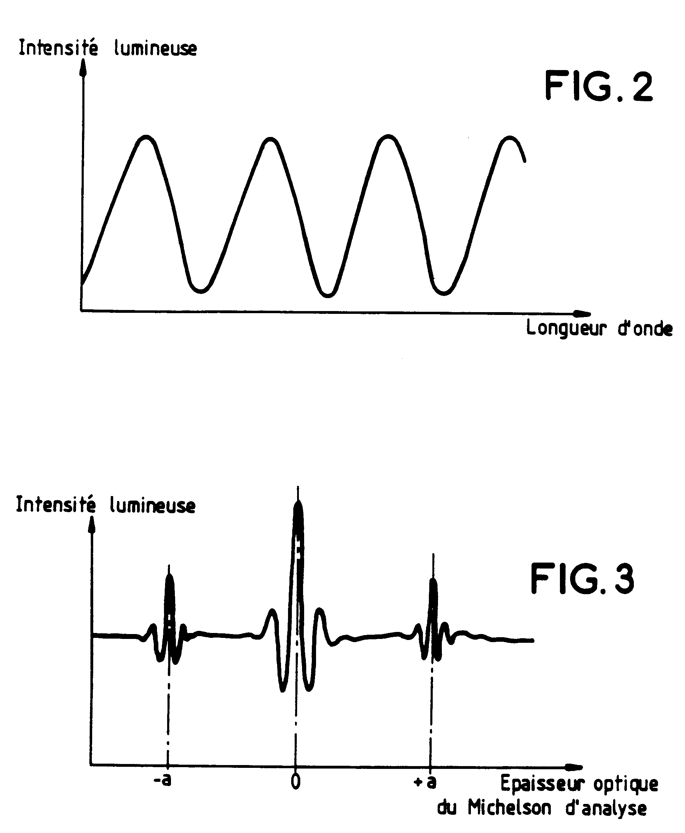

Le fonctionnement de ce dispositif connu est le suivant. La lumière blanche issue de la source 1 est acheminée par la fibre 2, en traversant le coupleur 3 jusqu'à l'interféromètre 4. La lentille 9 transforme le faisceau divergent issu de la fibre 2 en un faisceau parallèle. Ce dernier est séparé en deux parties 13A et 13B par la lame 10. Après réflexion sur les miroirs 11 et 12, ces deux parties de faisceau reviennent sur la lentille 9. Une partie de l'énergie des faisceaux ainsi réfléchis est renvoyée dans la fibre 2. On démontre que le spectre de la lumière renvoyée dans la fibre 2 est un spectre cannelé, tel que représenté en figure 2. Si l'on note $\underline{a}$ l'épaisseur optique équivalente de l'interféromètre 4, la position des cannelures dans le spectre est donnée par la relation :

$$2a = K\lambda \text{ (avec } K = \text{ nombre entier}$$
$$\text{et } \lambda = \text{ longueur d'onde)}$$

La lumière présentant ce spectre cannelé parvient, par la fibre 2 et le coupleur 3 à l'interféromètre 5 qui la filtre une seconde fois et l'envoie sur le détecteur 7. On démontre également que lorsque l'on déplace le miroir mobile de l'interféromètre 5, le signal optique reçu par le détecteur est un interférogramme. Cet interférogramme est composé d'un signal central entouré de deux signaux secondaires symétriques. On démontre que le maximum du signal central est obtenu pour une épaisseur optique nulle de l'interféromètre, et que les maxima des signaux secondaires sont obtenus pour des épaisseurs de l'interféromètre égales à +a et -a. Connaissant en fonction du temps la position du miroir mobile du deuxième interféromètre 5, il est possible, par repérage des

maxima, de retrouver $\underline{a}$, et donc de connaître les micro-déplacements du miroir mobile du premier interféromètre 4.

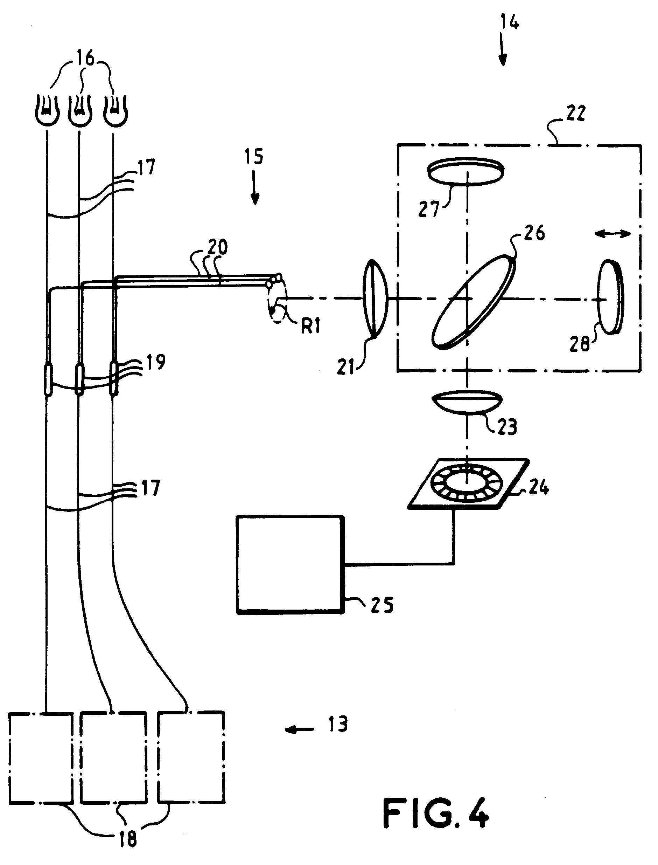

Le dispositif de mesure multicapteurs de l'invention, représenté en figure 4, comprend essentiellement, pour N capteurs : un ensemble 13 de N têtes de mesure, une tête d'analyse unique 14 et un dispositif 15 de liaison entre les N têtes de mesure et la tête d'analyse.

Chacune des N têtes de mesure comprend : une source de lumière 16, une fibre 17 reliant la source à un interféromètre 18, et un coupleur 19 disposé sur la fibre 17. Le dispositif 15 comprend N fibres 20 reliant respectivement chacun des N coupleurs 19 à l'entrée de la tête d'analyse 14. Selon un mode de réalisation préféré de l'invention, les extrémités des N fibres 20 sont disposées sur un cercle de rayon R1.

La tête d'analyse 14 comprend un dispositif optique de collimation 21, de focale f1, un interféromètre 22, un dispositif optique 23 de focalisation, de focale f2, un détecteur 24, et un dispositif électronique 25 d'analyse. L'interféromètre 22 comprend une lame semi-réfléchissante 26, un miroir fixe 27 et un miroir mobile 28. Le dispositif électronique d'analyse 25 est de type connu en soi. Le détecteur 24 comprend N cellules photosensibles, par exemple des cellules CCD, disposées sur un cercle de rayon R2. L'interféromètre 22 pourrait aussi bien être d'un autre type : Fabry-Pérot ou Sagnac par exemple.

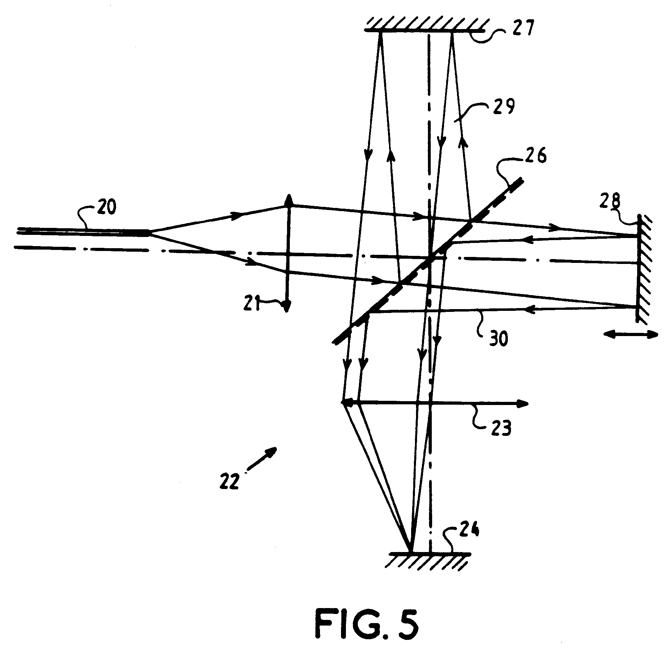

Le fonctionnement du dispositif de mesure décrit ci-dessus est le suivant. A un instant t donné, les N interféromètres 18 enregistrent des micro-déplacements que l'on note $a_i$ (i variant de 1 à N). Les N informations lumineuses provenant de ces N interféromètres 18 arrivent au bout des fibres 20. Pour chaque fibre, le trajet suivi par la lumière est alors le suivant (figure 5) : le faisceau de lumière est d'abord collimaté par le dispositif optique 21 qui en fait un faisceau parallèle. On démontre que ce faisceau fait avec l'axe optique du dispositif 21 un angle θ qui vaut :

$$\theta = \text{arc tg } R1/f1$$

Ce faisceau est ensuite séparé par la lame 26 en deux faisceaux 29 et 30. Ceux-ci arrivent respectivement sur les miroirs 27 et 28 avec une incidence θ, sont réfléchis par ces miroirs, repassent par la lame 26, puis sont focalisés par le dispositif optique 23 sur une cellule Ci du dispositif 24 (i ayant l'une des valeurs de 1 à N), et ceci, indépendamment des déplacements du miroir mobile 28. On démontre que ceci, est possible à condition que $\dfrac{R1}{f1} = \dfrac{R2}{f2}$. On démontre également que, dans ce cas, l'épaisseur optique équivalente b de l'interféromètre 22 vaut :

$$b = a \cos \theta$$

avec a = épaisseur optique sur l'axe des miroirs 27, 28.

Par symétrie du système, tous les trajets suivis par l'ensemble des faisceaux issus des fibres 20 sont égaux et aboutissent chacun sur une cellule différente Ci du dispositif 24.

Lorsque l'on déplace le miroir mobile 28, on enregistre donc simultanément les N interférogrammes des N capteurs Ci du dispositif 24. Il suffit alors de repérer sur chaque cellule Ci les maxima d'intensité pour en déduire les différents micro-déplacements ai des miroirs mobiles des interféromètres 18.

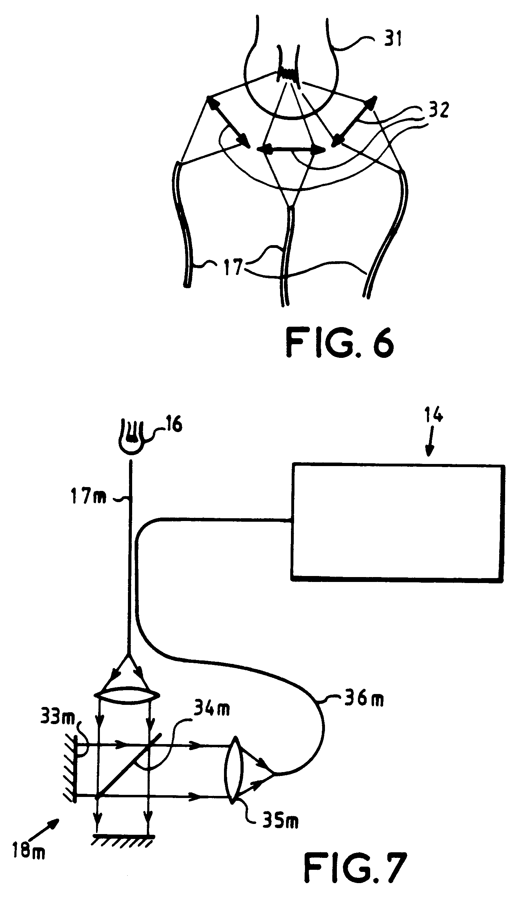

Selon le mode de réalisation de la figure 6, on peut remplacer les N sources de lumière 16 par une source unique 31 alimentant les N fibres 17 par l'intermédiaire à chaque fois d'un dispositif optique de condensation 32.

Selon le mode de réalisation de la figure 7, on peut supprimer les coupleurs 19, et utiliser, pour récupérer les faisceaux de lumière produits par les différents interféromètres 18, une fibre placée sur la voie inutilisée de chacun de ces interféromètres de mesure. Sur cette figure 7, on n'a représenté qu'un seul des N interféromètres de mesure, référencé 18m, avec la fibre 17m et la source de lumière 16m correspondantes (ou la source unique 3 si l'on utilise le mode de réalisation de la figure 6). Dans l'interféromètre 18m la lumière renvoyée par le miroir fixe 33m vers la lame semi-réfléchissante 34m est dirigée vers un dispositif optique de focalisation 35m qui l'envoie sur une fibre 36m. Cette fibre 36m est reliée au dispositif 14 de la même façon que les fibres 20.

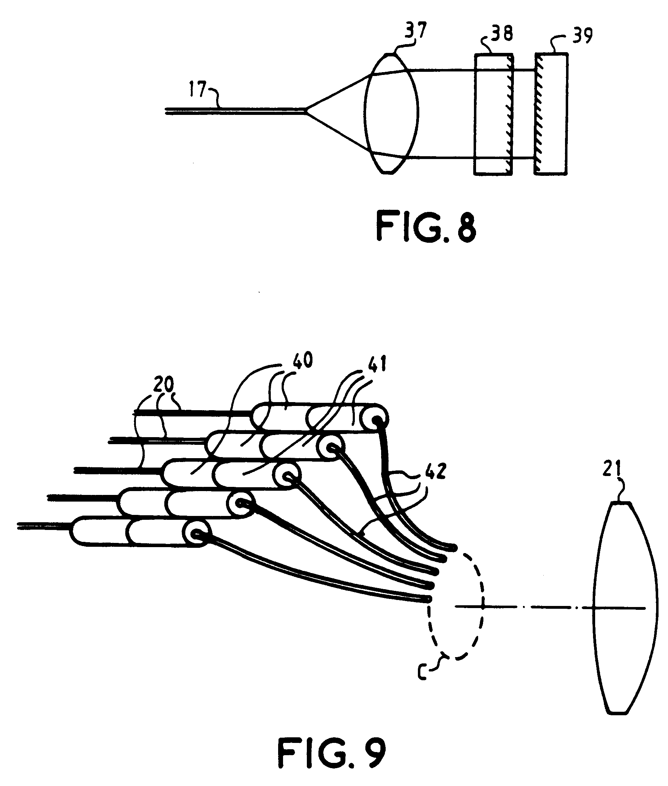

Ainsi que représenté en figure 8, on peut remplacer, dans la tête de mesure, l'interféromètre de Michelson par un interféromètre de Fizeau. L'extrémité d'une fibre optique telle que la fibre 17 est placée au foyer d'un dispositif optique de collimation 37 derrière lequel sont disposés un miroir fixe 38 et un miroir mobile 39.

Dans le dispositif 15 de la tête d'analyse, il est avantageux, pour des raisons d'encombrement, et de facilité de réalisations optique et mécanique, de disposer les extrémités des fibres optiques (20 ou 36) sur un cercle de faible rayon. Typiquement, ce rayon est de quelques millimètres. Si l'on utilise des fibres optiques munies de connecteurs, cela n'est pas réalisable. Selon la solution de la figure 9, on peut alors conserver quand même un faible rayon. A cet effet, on couple chaque connecteur 40 d'une fibre 20 à un connecteur correspondant relié à une fibre-relais 42 dont l'extrémité libre est disposée sur un cercle C de faible rayon (quelques millimètres), face au dispositif optique 21.

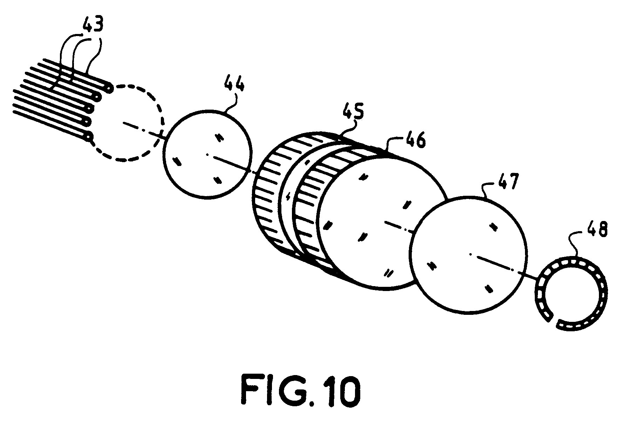

Comme mentionné ci-dessus, le dispositif d'analyse de l'invention peut fonctionner avec d'autres types d'interféromètres, par exemple un inteféromètre de Fizeau. On a représenté en figure 10 une vue éclatée d'une tête de mesure utilisant un tel interféromètre. En vis-à-vis des extrémités de N fibres optiques 43 disposées sur un cercle de petit rayon (quelques millimètres), on dispose respectivement un dispositif optique de collimation 44, un miroir fixe 45, un miroir mobile 46, un dispositif optique de focalisation 47, et un dispositif à capteurs 48 comportant N éléments capteurs, par exemple des capteurs CCD, disposés sur un cercle de petit rayon. Le dispositif 48 est relié à un dispositif électronique d'analyse similaire au dispositif 25. On peut également utiliser des interféromètres de Fabry-Perot ou de Sagnac, pour la mesure et/ou pour l'analyse.

Dans la tête d'analyse de l'invention, les déplacements du miroir mobile de l'interféromètre d'analyse doivent être réalisés avec une extrême précision. Une solution avantageuse consiste à monter le miroir mobile sur des cales piézoélectriques dont les micro-déplacements sont commandés, de façon connue en soi, par des tensions électriques.

Un des principaux avantages du dispositif de l'invention est de permettre l'analyse de N capteurs à l'aide d'un seul interféromètre, sans avoir recours aux dispositifs classiques de multiplexage qui ont en général l'inconvénient d'avoir des rendements photométriques faibles (de l'ordre de 1/N pour N capteurs).

D'autres avantages sont liés à la répartition à symétrie radiale des fibres et des capteurs. Cette répartition permet de travailler avec des dispositifs de focalisation et de collimation simples du fait qu'ils fonctionnent pour un seul champ. En outre, cette répartition permet d'obtenir des trajets optiques identiques quelle que soit la fibre (parmi les N fibres) utilisée, et par conséquent d'utiliser le même algorithme de traitement pour tous les capteurs, ce qui ne pourrait être le cas avec une autre disposition des fibres : fibres disposées linéairement ou en matrice par exemple.

## Revendications

1. Dispositif d'analyse de capteurs interférométriques de micro-déplacements, dans un système comportant plusieurs (N) capteurs ayant chacun un interféromètre de mesure (18), caractérisé par le fait que chaque interféromètre de mesure est relié par une fibre optique (20 ou 36m) à un dispositif d'analyse comportant un seul interféromètre commun d'analyse (22), les extrémités des différentes fibres optiques, côté analyse, étant disposées sur un cercle et coopérant avec un dispositif optique de collimation (21, 37, 44) placé devant l'interféromètre d'analyse (22, 38-39, 45 à 48).

2. Dispositif selon la revendication 1, caractérisé par le fait que le dispositif d'analyse comporte un dispositif de collimation (23) disposé à la sortie de l'interféromètre d'analyse, et suivi d'un détecteur circulaire (24) composé de N cellules photosensibles.

3. Dispositif selon l'une des revendications 1 ou 2, caractérisé par le fait qu'une seule source de lumière (31) coopère avec plusieurs fibres optiques (17) de capteurs, par l'intermédiaire de dispositifs de condensation (32).

4. Dispositif selon l'une des revendications précédentes, caractérisé par le fait que, pour chaque capteur, la fibre optique (20) reliant l'interféromètre de mesure au dispositif d'analyse est reliée à un coupleur (19) disposé sur la fibre optique (17) reliant la source de lumière à l'interféromètre de mesure.

5. Dispositif selon l'une des revendications 1 à 3, caractérisé par le fait que, pour chaque capteur, la fibre optique (36m) reliant l'interféromètre de mesure (18m) au dispositif d'analyse est disposée sur la voie inutilisée de l'interféromètre de mesure (33m, 35m).

6. Dispositif selon l'une des revendications précédentes, dont les fibres reliant les interféromètres de mesure au dispositif d'analyse comportent des connecteurs (40), caractérisé par le fait que ces connecteurs sont reliés par des connecteurs correspondants à des fibres-relais (42), dont les extrémités libres sont disposées sur un cercle (C).

7. Dispositif selon l'une des revendications précédentes, caractérisé par le fait qu'il comporte des interféromètres de Michelson.

8. Dispositif selon l'une des revendications précédentes, caractérisé par le fait qu'il comporte au moins l'un des interféromètres suivants : Fizeau, Fabry-Pérot, Sagnac.

## Patentansprüche

1. Analysevorrichtung für interferometrische Mikroverschiebungssensoren in einem System mit mehreren (N) Sensoren, die jeweils ein Meß-Interferometer (18) enthalten, dadurch gekennzeichnet, daß jedes Meß-Interferometer über eine Lichtleitfaser (20 oder 36m) mit einer Analysevorrichtung verbunden ist, die ein einziges gemeinsames Analyse-Interferometer (22) enthält, wobei die Enden der verschiedenen Lichtleitfasern auf Seiten der Analyse auf einem Kreis angeordnet sind und mit einer optischen Kollimationsvorrichtung (21, 37, 44) zusammenarbeiten, die vor dem Analyse-Interferometer (22, 38-39, 45 bis 48) angebracht ist.

2. Vorrichtung nach Anspruch 1, dadurch gekennzeichnet, daß die Analysevorrichtung eine Kollimationsvorrichtung (23) enthält, die am Ausgang des Analyse-Interferometers angeordnet ist und an die sich ein kreisförmiger Detektor (44) anschließt, der aus N lichtempfindlichen Zellen zusammengesetzt ist.

3. Vorrichtung nach einem der Ansprüche 1 oder 2, dadurch gekennzeichnet, daß mit mehreren Sensor-Lichtleitfasern (17) über Kondensationsvorrichtungen (32) eine einzige Lichtquelle (31) zusammenarbeitet.

4. Vorrichtung nach einem der vorhergehenden Ansprüche, dadurch gekennzeichnet, daß für jeden Sensor die das Meß-Interferometer mit der Analysevorrichtung verbindende Lichtleiterfaser (20) mit einem Koppler (19) verbunden ist, der an der Lichtleitfaser (17) angebracht ist, die die Lichtquelle mit dem Meß-Interferometer verbindet.

5. Vorrichtung nach einem der Ansprüche 1 bis 3, dadurch gekennzeichnet, daß für jeden Sensor die das Meß-Interferometer (18m) mit der Analysevorrichtung verbindende Lichtleitfaser (36m) an dem nicht benutzten Übertragungsweg des Meß-Interferometers (33m, 35m) angebracht ist.

6. Vorrichtung nach einem der vorhergehenden Ansprüche, bei welcher die Meß-Interferometer mit der Analysevorrichtung verbindenden Fasern Verbinder (40) enthalten, dadurch gekennzeichnet, daß die Verbinder mit Hilfe entsprechender Verbinder an Relais-Fasern (42) angeschlossen sind, deren freie Enden längs eines Kreises (C) angeordnet sind.

7. Vorrichtung nach einem der vorhergehenden Ansprüche, dadurch gekennzeichnet, daß sie Michelson-Interferometer enthält.

8. Vorrichtung nach einem der vorhergehenden Ansprüche, dadurch gekennzeichnet, daß sie wenigstens eines der folgenden Interferometer enthält: Fizeau, Fabry-Pérot, Sagnac.

**Claims**

1. Device for analysing interferometric sensors of micro-displacements, in a system including several (N) sensors each having a measurement interferometer (18), characterized in that each measurement interferometer is linked by an optical fibre (20 or 36m) to an analysis device including a single common analysis interferometer (22), the ends of the various optical fibres, analysis side, being arranged on a circle and cooperating with an optical collimating device (21, 37, 44) placed in front of the analysis interferometer (22, 38 - 39, 45 to 48).

2. Device according to Claim 1, characterized in that the analysis device includes a collimating device (23) arranged at the exit of the analysis interferometer, and followed by a circular detector (24) composed of N photo-sensitive cells.

3. Device according to one of Claims 1 or 2, characterized in that a single light source (31) cooperates with several optical fibres (17) of sensors, by way of condensing devices (32).

4. Device according to one of the preceding claims, characterized in that, for each sensor, the optical fibre (20) linking the measurement interferometer to the analysis device is linked to a coupler (19) arranged on the optical fibre (17) linking the light source to the measurement interferometer.

5. Device according to one of Claims 1 to 3, characterized in that, for each sensor, the optical fibre (36m) linking the measurement interferometer (18m) to the analysis device is arranged on the unused channel of the measurement interferometer (33m, 35m).

6. Device according to one of the preceding claims, wherein the fibres linking the measurement interferometers to the analysis device include connectors (40), characterized in that these connectors are linked by corresponding connectors to relay fibres (42), the free ends of which are arranged on a circle (C).

7. Device according to one of the preceding claims, characterized in that it includes Michelson interferometers.

8. Device according to one of the preceding claims, characterized in that it includes at least one of the following interferometers: Fizeau, Fabry-Pérot, Sagnac.

FIG. 1

FIG. 2

Intensité lumineuse

Longueur d'onde

FIG. 3

Intensité lumineuse

-a    0    +a    Epaisseur optique
du Michelson d'analyse

FIG. 4

FIG. 5

FIG. 6

FIG.7

FIG. 8

FIG. 9

11

FIG.10